# EUROPEAN PATENT SPECIFICATION

(11) **EP 4 022 264 B1**
(45) Date of publication and mention of the grant of the patent: **28.08.2024**
(21) Application number: 20740051.6
(22) Date of filing: 20.07.2020
(51) Int. Cl.: G01F 23/24

(54) **A METHOD FOR MEASURING A LIQUID LEVEL IN A PRESSURE VESSEL**
VERFAHREN ZUR MESSUNG EINES FLÜSSIGKEITSSTANDES IN EINEM DRUCKBEHÄLTER
PROCÉDÉ PERMETTANT DE MESURER UN NIVEAU DE LIQUIDE DANS UN RÉCIPIENT SOUS PRESSION

(30) Priority: 30.08.2019 EP 19194629
(43) Date of publication of application: 06.07.2022
(73) Proprietor: CASALE SA, 6900 Lugano (CH)
(72) Inventor: BERTINI, Paolo, 6900 Lugano (CH); SCOTTO, Andrea, 6932 Breganzona (CH); DI CARLO, Gabriele, 6900 Lugano (CH)
(74) Representative: M. Zardi & Co S.A.
(86) International application number: PCT/EP2020/070435
(87) International publication number: WO 2021/037438

(56) References cited:
- WO-A1-2019/096623
- CN-A- 106 768 160
- JP-A- H09 145 449
- US-A- 4 423 629
- US-A- 4 603 580
- US-A- 5 782 131
- US-A1- 2008 173 074
- US-B2- 6 615 658
- US-B2- 6 948 364

## Description

### Field of the invention

The invention relates to a method and system for measuring a liquid level of a fluid contained in a pressure vessel.

### Prior Art

Measuring a liquid level in a pressure vessel is a common task in many equipment found in chemical plants, including reactors (converters), strippers, condensers and the like. Normally, the pressure vessel contains a liquid in equilibrium with a gaseous phase above the liquid and a measure of the liquid level is required in order to properly control the process performed in the vessel.

The task of measuring the liquid level may become challenging under certain conditions, for example when one or both of pressure and temperature of the fluid are above the critical value, in the presence of a boiling liquid, when a chemical reaction occurs in the liquid and/or in the gaseous phase, in the presence of a corrosive environment.

A noticeable example of a pressure vessel wherein the measure of the liquid level may be difficult task is represented by a reactor for synthesis of urea from carbon dioxide and ammonia.

As disclosed in the literature (see e.g. Ullmann's Encyclopedia of Industrial Chemistry, Wiley-VCH Verlag) most modern urea processes implement a high-pressure synthesis loop involving a reactor, a stripper and a condenser operating at a high pressure of around 130 to 160 bar. The urea synthesis reactor operates under high temperature and pressure, possibly in a condition close to critical or supercritical, and contains a corrosive fluid particularly due to the presence of ammonium carbamate. Other equipment of a urea plant working under severe conditions includes the high-pressure stripper and the high-pressure condenser.

Still another noticeable example is a reactor for conversion of urea into melamine. The synthesis of urea and the synthesis of melamine may occur in the same plant, so called urea-melamine plant.

The known method for detection of the liquid level, particularly in the above mentioned cased of pressure vessels working under severe conditions, include the following.

Membrane-based transmitters which suffer from corrosion and permeation of hydrogen.

Radiation level measurement technique, e.g. with gamma rays, which obviously poses serious safety hazards.

Radar-based measurement, whose precision is however affected by the properties of the medium above the liquid level.

The radar technique is based substantially on the gaseous phase and the liquid phase having a different response to the radar signal. The precision of this technique is therefore affected when the gaseous phase and the liquid phase have similar properties, which may happens in certain conditions such as temperature and/or pressure close to the critical point or fluid being in a supercritical state. Furthermore, this method may be misled by a mist of small liquid droplets or by the formation of a foam above the liquid surface.

Despite the above drawbacks, the radar technique has been investigated for the application in the urea field, particularly to urea reactors. Radar-based techniques are disclosed for example in WO 2019/096623 A1 and in WO 2013/036108. In WO 2013/036108, it is suggested to solve the drawbacks of radar-based measurement by means of a hollow tube. This however does not fully eliminate the effect of mist or foam over the liquid. In addition, the installation of a relatively large hollow tube in a urea reactor is an additional cost and may negatively affect the operation of the reactor itself.

### Summary of the invention

The invention aims to provide a novel method for detection of the liquid level in a pressure vessel, which is accurate and adapted to work in aggressive environment and/or under severe operating conditions, particularly in the presence of a fluid in a near critical or supercritical condition.

This aim is reached with a method according to claim 1. Some preferred embodiments are disclosed in the dependent claims.

The method of the invention includes the detection of the temperature of one or more detection points on a heated inner surface of a thermometric well which is partially immersed in the liquid. The method further includes the comparison between at least one reference temperature and the temperature which is actually detected. Based on said comparison, the liquid level in the pressure vessel is estimated.

The invention is based on the finding that the heat transfer coefficient of the fluid surrounding the thermometric varies significantly at the liquid-gas interface. The gaseous phase has a heat transfer coefficient much lower than the liquid phase. If surrounded by the liquid phase, the inner surface of the well tends to approach the temperature of the liquid, due to a good heat transfer between the inside and outside of the well. If the inner surface is surrounded by the gaseous phase, on the contrary, the heat transfer is generally poor and will affect the temperature of the inner surface.

The at least one reference temperature, which is used for the estimation of the liquid level, may include one or more reference values. The reference temperature(s) may include, or be represented by, one or more of the following:
an expected temperature of the at least one detection point;
one or more past values of temperature previously detected at said at least one detection point;
one or more values of temperature of the fluid contained in the pressure vessel;
one or more values of temperature at the outer surface of the thermometric well.

The difference between the reference temperature(s) and the actual temperature is therefore a function of the heat transfer through the side wall of the thermometric well and said heat transfer depends on the coefficient of the surrounding fluid. Based on this relation, the method can estimate whether the surrounding fluid at a temperature detection point is liquid or gaseous and, consequently, the position (elevation) of the liquid level can be determined indirectly.

Preferably the inner surface of the thermometric well is heated to a target temperature which is greater than the temperature of the fluid around the thermometric well. Accordingly, the temperature of the inner surface of the thermometric well, at a point where the well is surrounded by the gaseous phase, will be close to the target temperature due to poor heat exchange. At a point where the well is surrounded by the liquid phase, in contrast, the temperature will be lower and closer to the temperature of the liquid. Based on this detection, the position of the liquid level can be estimated, e.g. using an expected temperature of the inner surface as a reference temperature.

To increase the resolution of the method, the temperature at several points of the inner surface of the well can be detected. For example a sudden change of temperature between two points denoted that the liquid level is located between said two points.

The fluid contained in the pressure vessel may be at a temperature and/or pressure close to or above the critical value. The fluid may also be a supercritical fluid (SCF) which denotes that both temperature and pressure are above the critical value.

An interesting application of the invention is measuring the liquid level in the pressure vessels of urea plants, melamine plants, and urea-melamine plants.

### Brief description of figures

Fig. 1 is a scheme of a pressure vessel, e.g. a urea reactor, including a temperature measuring system of the invention.
Fig. 2 is a scheme of the thermometric well of Fig. 1.

### Detailed description

The invention, in a broad manner, can be implemented by the following steps:
providing a thermometric well inside a pressure vessel;
heating an inner surface of the thermometric well;
detecting the temperature of at least one detection point of said inner surface;
estimating a position of the liquid level based on the difference between at least one reference temperature and the temperature detected at the previous step.

The thermometric well extends vertically in the pressure vessel, preferably to such an extent that the well extends through the expected range of the liquid level to be measured. The thermometric well is normally an elongated body.

The outer surface of the thermometric well is exposed to the fluid contained in the pressure vessel. The inside of the thermometric well is properly sealed. The inner surface therefore is not in a direct contact with the fluid contained in the pressure vessel. The outer surface and the inner surface are separated by a side wall of the thermometric well.

The step of heating the inner surface of the thermometric well is performed preferably by heating the inner surface to a target temperature greater than the temperature of the medium contained in the pressure vessel. Accordingly heat tends to be transferred from the inside toward the outside of the pressure well.

The at least one reference temperature, which is used for the determination of the position of the liquid level, may include an expected temperature of the detection point. Said expected temperature may be calculated as a function of the heating process of the inner surface, i.e. it can be equal to the target temperature which is set for said heating process, or can be a function of the power transferred in the heating process itself. The at least one reference temperature may also include past temperature values of said inner surface.

Using only expected and/or past temperature(s) of the inner surface as reference temperature may be preferred because, in this case, the method does not require a measure of temperature outside of the thermometric well where a temperature sensor would be exposed to the fluid.

The at least one reference temperature, however, may also include one or more temperature values of the fluid contained in the pressure vessel or temperature of the outer surface of the thermometric well, preferably at a point having the same elevation of the detection point of the inner surface.

A temperature of the medium contained in the pressure vessel is preferably detected at a point close to the thermometric well and close to the detection point of the inner surface. The temperature of the medium may include a temperature of the liquid phase and/or a temperature of the gaseous phase.

The comparison between the detected temperatures and the reference temperature(s) accounts for the actual heat transfer between the inner surface and the outer surface and, therefore, the heat transfer coefficient of the fluid at the elevation of the detection point.

The temperature of the inner surface may be detected at several detection points, at different elevation, in order to increase the resolution of the system. The temperature may be detected at several discrete points or also continuously by means of optical fibre distributed temperature sensing (DTS) system. Discrete detection points may be equally spaced, along the vertical direction, in a preferred embodiment.

Based on temperature detected at several detection points, a thermal profile of the inner surface of the thermometric well can be determined. Starting from discrete measures, the temperature profile may be suitably interpolated. The position of the liquid level can be estimated on the basis of said thermal profile.

The above tasks can be performed by a suitable processing unit, e.g. a suitable hardware configured to implement the method of the invention.

For example, in an embodiment, the method may detect a pair of consecutive detection points at different elevation (i.e. one above the other) on the inner surface of the thermometric well, wherein the difference temperature between said detection points is greater than the difference of temperature of other pairs of consecutive detection points. This pair is named a singular pair, because it shows a singularity (e.g. a sudden change) in the delta-T between consecutive points, compared to other pairs. The method assumes that the singularity is due to a change of the heat transfer between the two detection points caused by the different aggregation state (liquid Vs. vapour) of the surrounding medium. Therefore, the method assumes the liquid level is between the detection points of said singular pair. Based on the detected values, the method may also calculate the location of the liquid more precisely within the range defined by said pair.

If a temperature profile is acquired or calculated, the location of the liquid level may be revealed by a region where the temperature changes significantly within a small vertical distance due to the boundary between liquid and vapour.

In a simplified embodiment of the invention, a single temperature detection point may be used. In this event, the detection process is repeated over time, and the liquid level is assumed to have crossed the detection point when a change of temperature greater than a reference threshold is detected. Hence the method provides a level switch.

Heating of the inner surface of the thermometric well can be performed by an electric resistance installed in the thermometric well or other heating means.

An aspect of the invention is also a system for measuring the liquid level of a fluid in a pressure vessel, particularly in a chemical reactor, comprising a thermometric well which extends vertically in the pressure vessel, wherein the thermometric well has an inner surface which is not in contact with said fluid, being sealedly separated from the inside of the pressure vessel where the fluid is contained, wherein the thermometric well includes at least one heater arranged to heat said inner surface to a target temperature, and the system includes a hardware configured to detect the liquid level around the thermometric well with a method according to one of the embodiments described above.

Said hardware may include one or more temperature sensors to collect the temperature at selected points of the inner surface of the thermometric well, and an electronic board, PLC or equivalent which is suitably programmed to implement the method, e.g. to compare the detected temperatures and obtained the expected location of the liquid level. The temperature sensors are of a known type and may include thermocouples for example.

The advantages of the invention are: the liquid level can be measured indirectly, without a level gauge in direct contact with the fluid. The level can also be detected indirectly from the inside of the thermometric well, without any sensing means in direct contact with the fluid, which is particularly interesting when the fluid has severe conditions like temperature, pressure, corrosion. Thermometric wells which can resist such conditions are available at an affordable cost, while sensors adapted to operate in the same conditions are generally more expensive. The invention has no safety concerns; the invention is less sensitive to the problems of visual/radar systems especially in the presence of mist or foam just over the liquid level or of a fluid in a critical or supercritical condition. The precision of the inventive method can be determined by an appropriate number of temperature detection points.

Referring now to a preferred embodiment, which is illustrated in the figures, a chemical reactor 1 has a vertical pressure vessel 2 with a vertical axis A and, very schematically, has an input 4 of reagents and an output 5 of reaction products. Inside the reactor 1, a liquid level L exists. Above the liquid level, the reactor 1 contains a vapour phase which may be in equilibrium with the liquid phase.

As apparent to a skilled person, the reactor 1 may include other inputs and/or outputs. For example the reagents may enter via separate stream and a overhead gaseous stream may be withdrawn from top.

The reactor 1 has a liquid level detection system which operates with a thermometric well 10. The thermometric well 10 extends vertically inside the pressure vessel 2.

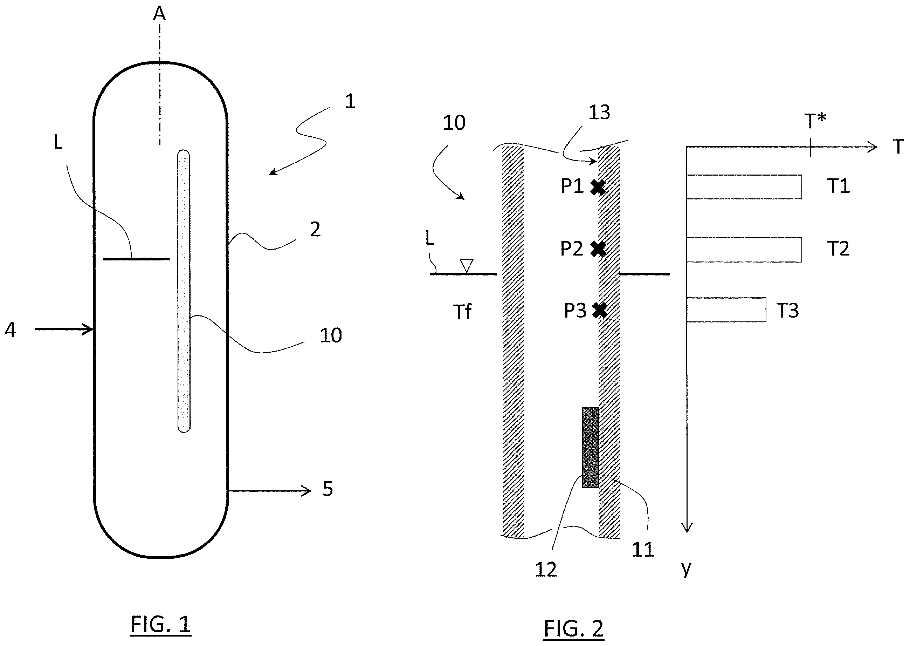

As elucidated in Fig. 2, the inner surface 13 of the thermometric well 10 is heated by a suitable heater 12 to a target temperature T*. The temperature of the inner surface 13 is detected at selected points, including for example points P1, P2, P3. The temperature is detected with suitable sensors.

The plot of Fig. 2 illustrates the temperature T1, T2, T3 detected at points P1, P2 and P3 respectively, along a vertical coordinate y. The plot also shows the target temperature T* which is the setpoint of the heater 12. The target temperature T* is greater than the temperature Tf of the fluid contained in the pressure vessel 2.

In the example, the temperature T1 and T2 detected at points P1 and P2 is close to the target temperature T* due to the poor heat transfer, therefore dissipation of the heat input of the heater 12, through the side wall 11. The poor heat transfer is due to the presence of a gaseous phase around the well 10 at the elevation (y-coordinate) of points P1 and P2.

In the point P3 where the well 10 is surrounded by the liquid, however, the detected temperature T3 is lower than T1 and T2 and closer to the temperature Tf. This is caused by the much higher heat transfer coefficient of the liquid (compared to vapour) and therefore more heat transferred to the fluid via the side wall 11.

The system therefore assumes that the liquid level L is between the points P2 and P3. The system may assume so if the difference (T2 - T3) is greater than a certain threshold.

In an embodiment (not shown) only one detection point, for example P1, is provided. In this case, the method may use past temperature values as reference. The method may therefore detect a sudden change in the temperature at P1 and assume that the liquid level has just crossed the elevation of P1.

In another not shown embodiment, the temperature Tf of the medium is used as a reference for the determination of the position of the liquid level. For example, the system may include a first thermocouple arranged to detect the temperature of the inner surface 13 and a second thermocouple arranged below the expected range of the liquid level L to detect the temperature of the liquid. The system may also include a further thermocouple arranged to detect the temperature of the gaseous phase above the level L.

## Claims

1. A method for measuring a liquid level (L) of a fluid contained in a pressure vessel (2) the method comprising:
i) providing a thermometric well (10) inside the pressure vessel, wherein the thermometric well extends vertically in the pressure vessel;
ii) wherein said thermometric well has an inner surface (13) which is not in contact with the fluid and is separated from the fluid by a side wall (11) of the thermometric well;
iii) heating said inner surface of the thermometric well;
iv)detecting the temperature of at least one detection point of said inner surface;
v) estimating a position of the liquid level based on the difference between at least one reference temperature and the actual temperature detected at step iv);
wherein the pressure vessel is a piece of equipment of a plant for the synthesis of urea, or of a plant for the synthesis of melamine.

2. Method according to claim 1, wherein the step iii) of heating the inner surface of the thermometric well includes heating the inner surface to a target temperature greater than the temperature of the medium contained in the pressure vessel.

3. Method according to claim 1 or 2, wherein, in the step v), the at least one reference temperature includes an expected temperature of the at least one detection point.

4. Method according to any of the previous claims wherein, in the step v), the at least one reference temperature includes a temperature previously detected at said at least one detection point.

5. Method according to any of the previous claims, wherein, in the step v), the at least one reference temperature includes a temperature of the fluid contained in the pressure vessel.

6. Method according to any of claims 1 to 5, wherein the step iv) includes detecting the temperature of at least two detection points of said inner surface at different elevation.

7. Method according to claim 6, wherein the step v) includes: determining a thermal profile of the inner surface of the thermometric well, based on the temperature detected at said detection points, and the position of the liquid level is estimated on the basis of said thermal profile.

8. Method according to claim 6 or 7, wherein step v) includes: measuring the temperature at several detection points on the inner surface, the detection points being at different elevations; detecting a singular pair of consecutive detection points wherein the difference temperature between said detection points is greater than the difference of temperature of other pairs of consecutive detection points; assuming that the liquid level is located between the detection points of said singular pair.

9. Method according to any of claims 1 to 5, wherein the step iv) is performed by detecting the temperature at only one detection point and is repeated over time, and the step v) includes that the liquid level is assumed to have crossed the detection point when a change of temperature greater than a reference threshold is detected.

10. Method according to any of the previous claims, wherein the step iii) is performed by means of an electric resistance installed in the thermometric well.

11. A system for measuring the liquid level of a fluid in a pressure vessel, particularly in a chemical reactor, comprising a thermometric well (10) which extends vertically in the pressure vessel, wherein the thermometric well has an inner surface (13) which is not in contact with said fluid, being sealedly separated from the inside of the pressure vessel where the fluid is contained, wherein the thermometric well includes at least one heater (12) arranged to heat said inner surface (13) to a target temperature, the vessel being a piece of equipment of a plant for the synthesis of urea, or of a plant for the synthesis of melamine, and the system includes a hardware configured to detect the liquid level around the thermometric well with a method according to any of claims 1 to 10.

## Patentansprüche

1. Verfahren zur Messung eines Füllstands (L) eines Fluids, das in einem Druckbehälter (2) enthalten ist, wobei das Verfahren umfasst:
i) Bereitstellen einer thermometrischen Vertiefung (10) innerhalb des Druckbehälters, wobei sich die thermometrische Vertiefung vertikal in dem Druckbehälter erstreckt;
ii) wobei besagte thermometrische Vertiefung eine innere Oberfläche (13) aufweist, die nicht mit dem Fluid in Kontakt ist und die durch eine Seitenwand (11) der thermometrischen Vertiefung von dem Fluid getrennt ist;
iii) Erwärmen von besagter innerer Oberfläche der thermometrischen Vertiefung;
iv) Erfassten der Temperatur von zumindest einem Erfassungspunkt von besagter innerer Oberfläche;
v) Schätzen einer Position des Füllstands basierend auf dem Unterschied zwischen zumindest einer Referenztemperatur und der tatsächlichen Temperatur, die bei Schritt iv) erfasst wurde;
wobei der Druckbehälter ein Ausrüstungsteil einer Anlage zur Synthese von Harnstoff oder einer Anlage zur Synthese von Melamin ist.

2. Verfahren gemäß Anspruch 1, wobei der Schritt iii) zum Erwärmen der inneren Oberfläche der thermometrischen Vertiefung ein Erwärmen der inneren Oberfläche auf eine Zieltemperatur beinhaltet, die größer ist als die Temperatur des in dem Druckbehälter enthaltenen Mediums.

3. Verfahren gemäß Anspruch 1 oder 2, wobei, in dem Schritt v), die zumindest eine Referenztemperatur eine zu erwartende Temperatur des zumindest einen Erfassungspunkts beinhaltet.

4. Verfahren gemäß einem der vorstehenden Ansprüche, wobei, in dem Schritt v), die zumindest eine Referenztemperatur eine Temperatur beinhaltet, die zuvor an besagtem zumindest einen Erfassungspunkt erfasst wurde.

5. Verfahren gemäß einem der vorstehenden Ansprüche, wobei, in dem Schritt v), die zumindest eine Referenztemperatur eine Temperatur des in dem Druckbehälter enthaltenen Fluids beinhaltet.

6. Verfahren gemäß einem der Ansprüche 1 bis 5, wobei der Schritt iv) ein Erfassen der Temperatur von zumindest zwei Erfassungspunkten von besagter innerer Oberfläche in verschiedenen Höhenlagen beinhaltet.

7. Verfahren gemäß Anspruch 6, wobei der Schritt v) beinhaltet: Bestimmen eines thermischen Profils der inneren Oberfläche der thermometrischen Vertiefung basierend auf der an besagten Erfassungspunkten erfassten Temperatur, und die Position des Füllstands wird auf der Basis des besagten thermischen Profils geschätzt.

8. Verfahren gemäß Anspruch 6 oder 7,wobei Schritt v) beinhaltet: Messen der Temperatur an mehreren Erfassungspunkten auf der inneren Oberfläche, wobei die Erfassungspunkte in verschiedenen Höhenlagen sind; Erfassen eines singulären Paars von aufeinanderfolgenden Erfassungspunkten, wobei die Differenztemperatur zwischen besagten Erfassungspunkten größer ist als die Different der Temperatur anderer Paare von aufeinanderfolgenden Erfassungspunkten; Annehmen, dass der Füllstand zwischen den Erfassungspunkten von besagtem singulären Paar lokalisiert ist.

9. Verfahren gemäß einem der Ansprüche 1 bis 5, wobei der Schritt iv) durchgeführt wird, indem die Temperatur an nur einem Erfassungspunkt erfasst wird und im Laufe der Zeit wiederholt wird, und der Schritt v) beinhaltet, dass angenommen wird, dass der Füllstand den Erfassungspunkt überschritten hat, wenn eine Temperaturänderung größer als ein Referenzschwellwert erfasst wird.

10. Verfahren gemäß einem der vorstehenden Ansprüche, wobei der Schritt iii) mittels eines elektrischen Widerstands, der in der thermometrischen Vertiefung installiert ist, durchgeführt wird.

11. System zum Messen des Füllstand eines Fluids in einem Druckbehälter, insbesondere in einem Chemiereaktor, umfassend eine thermometrische Vertiefung (10), die sich vertikal in dem Druckbehälter erstreckt, wobei die thermometrische Vertiefung eine innere Oberfläche (13) aufweist, die mit besagter Flüssigkeit nicht in Kontakt ist, abgedichtet von der Innenseite des Druckbehälters getrennt, in dem das Fluid enthalten ist, wobei die thermometrische Vertiefung zumindest ein Heizgerät (12) beinhaltet, das angeordnet ist, um gesagte innere Oberfläche (13) auf eine Zieltemperatur zu erwärmen, wobei der Behälter ein Ausrüstungsteil einer Anlage für die Synthese von Harnstoff oder eine Anlage für die Synthese von Melamin ist, und das System eine Hardware beinhaltet, die eingerichtet ist, den Füllstand um die thermometrische Vertiefung herum mit einem Verfahren gemäß einem der Ansprüche 1 bis 10 zu erfassen.

## Revendications

1. Procédé de mesure d'un niveau de liquide (L) d'un fluide contenu dans un récipient à pression (2), le procédé comprenant :
i) la fourniture d'un puits thermométrique (10) à l'intérieur du récipient à pression, dans lequel le puits thermométrique s'étend verticalement dans le récipient à pression ;
ii) dans lequel ledit puits thermométrique présente une surface interne (13) qui n'est pas en contact avec le fluide et est séparée du fluide par une paroi latérale (11) du puits thermométrique ;
iii) le chauffage de ladite surface interne du puits thermométrique ;
iv) la détection de la température d'au moins un point de détection de ladite surface interne ;
v) l'estimation d'une position du niveau de liquide sur la base de la différence entre au moins une température de référence et la température réelle détectée dans l'étape iv) ;
dans lequel le récipient à pression est un élément d'équipement d'une installation de synthèse d'urée ou d'une installation de synthèse de mélamine.

2. Procédé selon la revendication 1, dans lequel l'étape iii) de chauffage de la surface interne du puits thermométrique comprend le chauffage de la surface interne à une température cible supérieure à la température du milieu contenu dans le récipient à pression.

3. Procédé selon la revendication 1 ou 2, dans lequel, dans l'étape v), l'au moins une température de référence comprend une température attendue de l'au moins un point de détection.

4. Procédé selon l'une quelconque des revendications précédentes dans lequel, dans l'étape v), l'au moins une température de référence comprend une température précédemment détectée audit au moins un point de détection.

5. Procédé selon l'une quelconque des revendications précédentes, dans lequel, dans l'étape v), l'au moins une température de référence comprend une température du fluide contenu dans le récipient à pression.

6. Procédé selon l'une quelconque des revendications 1 à 5, dans lequel l'étape iv) comprend la détection de la température d'au moins deux points de détection de ladite surface interne à des hauteurs différentes.

7. Procédé selon la revendication 6, dans lequel l'étape v) comprend : la détermination d'un profil thermique de la surface interne du puits thermométrique, sur la base de la température détectée auxdits points de détection, et la position du niveau de liquide est estimée sur la base dudit profil thermique.

8. Procédé selon la revendication 6 ou 7, dans lequel l'étape v) comprend : la mesure de la température à plusieurs points de détection sur la surface interne, les points de détection étant à différentes hauteurs ; la détection d'une paire singulière de points de détection consécutifs, dans lequel la différence de température entre lesdits points de détection est supérieure à la différence de température d'autres paires de points de détection consécutifs ; le fait de supposer que le niveau de liquide est situé entre les points de détection de ladite paire singulière.

9. Procédé selon l'une quelconque des revendications 1 à 5, dans lequel l'étape iv) est effectuée en détectant la température au niveau d'un seul point de détection et est répétée au cours du temps, et l'étape v) comprend le fait que le niveau de liquide est supposé avoir franchi le point de détection lorsqu'un changement de température supérieur à un seuil de référence est détecté.

10. Procédé selon l'une quelconque des revendications précédentes, dans lequel l'étape iii) est effectuée au moyen d'une résistance électrique installée dans le puits thermométrique.

11. Système de mesure du niveau de liquide d'un fluide dans un récipient à pression, en particulier dans un réacteur chimique, comprenant un puits thermométrique (10) qui s'étend verticalement dans le récipient à pression, dans lequel le puits thermométrique présente une surface interne (13) qui n'est pas en contact avec ledit fluide, en étant séparé de manière étanche de l'intérieur du récipient à pression où le fluide est contenu, dans lequel le puits thermométrique comprend au moins un dispositif chauffant (12) agencé pour chauffer ladite surface interne (13) jusqu'à une température cible, le récipient étant un élément d'équipement d'une installation de synthèse d'urée ou d'une installation de synthèse de mélamine, et le système comprend un matériel configuré pour détecter le niveau de liquide autour du puits thermométrique avec un procédé selon l'une quelconque des revendications 1 à 10.
